Europäisches Patentamt

(19) European Patent Office

Office européen des brevets

(11) Publication number: **0 207 006**
A2

(12) # EUROPEAN PATENT APPLICATION

(21) Application number: **86830071.6**

(22) Date of filing: **25.03.86**

(51) Int. Cl.⁴: **A 23 G 9/28,** A 23 G 9/24

(30) Priority: **01.04.85 IT 4003185**

(71) Applicant: **ITALGEL S.P.A., Via Tanara no. 20, I-43100 Parma (IT)**

(43) Date of publication of application: **30.12.86 Bulletin 86/52**

(72) Inventor: **Chioccioni, Enrico, V.le Partigiani d'Italia n. 6, I-43100 Parma (IT)**

(84) Designated Contracting States: **AT BE CH DE FR GB LI LU NL SE**

(74) Representative: **Bonfreschi, Mario, Bugnion S.p.A. Viale Trento Trieste, 25, I-41100 Modena (IT)**

(54) **Process and plant for the manufacture of a sweet comprising ice cream and sponge cake.**

㊾ The invention relates to a process for manufacture of a new individual sweet featuring ice cream and sponge, and to plant therefor.

The process involves depositing sponge mix on files of individual papers (2) perforated from continuous sheet (1), baking, and then topping the sponge discs produced with ice cream; the sponge is then folded across into a "turnover", enveloping the ice cream, and the end-product duly frozen.

Plant for implementation of the process comprises a perforator, a first batching unit (3) and an oven (5), all of which conventional, which turn out composite bases each consisting of a paper (2) and a sponge base (4), also, a conveyor (6) with folding bearers (15) on which the composite bases are set in readiness to receive ice cream from a second batching unit (7); guide means are provided which occasion rotation of the bearer's folding parts such that the sponge is wrapped around the ice cream.

ACTORUM AG

0207006

Process and plant for the manufacture of a new individual sweet featuring ice cream and sponge cake

The invention described herein relates to a process
for packaging a new individual sweet made from ice
cream and sponge, and to plant for implementation of
such a process.

The ice cream industries, and the food and other
industries at large, are constantly engaged in the
search for new products to attract the appetite and
attention of consumers, and for new processes and
plant which will enable fast, economical manufacture
of such products.

Accordingly, the object of the invention is to set
forth a process and relative plant for the manufacture of a new individual sweet featuring ice cream
and sponge cake, which will ensure speed and economy
of production.                       —

This object is realized by adoption of the process
disclosed, which is characterized in that it comprises the following steps:

-piercing of a continuous sheet of baking paper to
the end of obtaining individual papers disposed in
files and held together by way of the perforations
created;

-deposition of sponge mix onto each individual paper
by free fall in such a way that the mix will spread
to assume a shape similar to but smaller than that
of the paper;

-baking of the sponge mix thus deposited on the continuous sheet of paper in an oven, thereby obtaining sponge bases each positioned on a relative paper;

-separation of the individual papers together with the relative sponge bases, so as to form composite bases;

-deposition of ice cream onto each composite base, substantially at the centre;

-cross-folding of the base around the ice cream, 'turnover' fashion, in such a way as to invest the sweet with its final shape;

-freezing of the sweet thus produced.

The stated object is realized similarly with plant as disclosed, which is characterized in that it comprises:

-a press of conventional type, designed to pierce a continuous sheet of baking paper in such a way as to create a number of files of individual sweet papers, which remain interconnected by way of the perforations produced;

-a first batching unit of conventional type, which deposits quantities of sponge mix onto a rank of individual papers, simultaneously;

-an oven of conventional type, in which the mix is baked to the end of producing sponge bases, each resting on a relative paper;

-a conveyor provided with bearers, each of which in receipt of a sponge base and relative paper, and comprising a central section integral with the conveyor, of width less than that of the sponge base, and a pair of side sections hinged one to each side of the central section;

-guide means designed to occasion and control rotation of the side sections;

-a second batching unit of conventional type located above the conveyor and designed to deposit ice cream onto the sponge base;

-a conventional cold store in which to freeze the sweet obtained by the process.

The invention will now be described in detail, by way of example, with the aid of the accompanying drawings, in which:

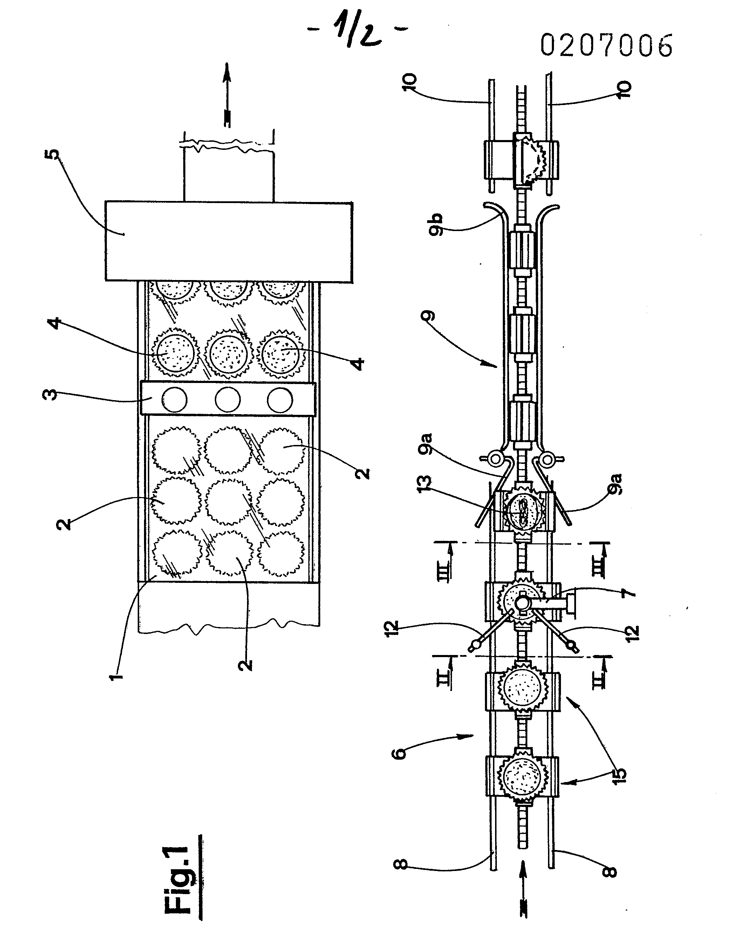

-fig 1 is a schematic representation of plant as described herein, viewed from above;

-fig 2 is a larger-scale schematic representation of the section through II-II in fig 1;

-fig 3 is a larger-scale schematic representation of the section through III-III in fig 1, which illustrates the folded position of the conveyor bearer;

-fig 4 is a larger-scale schematic representation of two successive bearers, viewed in perspective, in which the first such bearer is shown in the fully spread position, and the second in the fully folded position.

The process to which the invention relates, and plant for its implementation, can be considered in two sets of steps and stages respectively, the first of which regarding preparation of the sponge base, and the second, effective packaging of the sweet.

These two sets of steps need not necessarily be implemented one immediately following the other, just as the two plant stages not necessarily occupy the same building; indeed, the desirability of separating the 'hot' part of the process from the 'cold' generally dictates that these be carried through on different premises.

The process disclosed envisages piercing a continuous sheet 1 of baking paper in such a way as to produce a number of files of individual papers 2 that remain interconnected via the perforations produced; the shape generally preferred for these papers is circular, with a pinked periphery.

This accomplished, sponge mix is deposited on each of the individual papers, falling freely such that it assumes a shape similar to that of the paper, but smaller.

The sponge mix, deposited on the continuous sheet, is then baked in an oven; thus one obtains a number of composite bases, each consisting of an individual paper 2 and a relative base 4 of baked sponge; the composite bases are then separated from one another. Plant for the implementation of this first set of steps of the process comprises a press (not illustrated, being of a conventional type), which pierces the continuous sheet 1 in such a way as to produce the files of individual papers 2, and a first batching unit 3, likewise of conventional type, which deposits sponge mix on each of the individual papers making up a rank, simultaneously; such an operation will generally be accomplished by feeding the continuous sheet beneath the unit.

The first stage of plant also comprises an oven 5 of conventional type in which the mix lying on the individual papers is baked, and from which composite bases emerge, each base consisting of an individual paper 2 and a base of baked sponge 4.

To reiterate, this first set of steps will generally be carried out on premises other than those on which the second set of steps is implemented; accordingly, the composite bases are separated one from the next and transferred to the premises where the second set of steps is due to be carried through.

Ice cream is now deposited on each of the composite bases, and more exactly, at the centre of the sponge base 4, whereupon the composite base with its filling of ice cream is folded across, i.e., through its diameter, in order to assume the ultimate 'turnover' shape in which it will be offered to the consumer. Such a fold is made possible by virtue of the accompanying sweet paper 2 which prevents the sponge base from breaking along the line of the fold. It will be observed, furthermore, that the individual paper on which sponge mix is deposited, in the initial steps of the process, is the same as that in which the sweet is ultimately packaged, and which, in addition to enabling the fold, enables the consumer to handle the sweet in such a way that direct contact with the fingers is avoided. The final step is that of freezing the sweet in order to preserve it.

6

The second set of steps is implemented by plant comprising a conveyor 6 provided with bearers 15 each of which affords support to one composite paper-and-sponge base. The drive system of the conveyor illustrated utilizes a chain 14, though other types are possible, clearly enough. The single bearer 15 comprises a flat central section 15a integral with the moving part of the conveyor 6 (i.e. the chain 14), and a pair of side sections 15b, each one of which hinged to a relative edge of the central section 15a and free to rotate thereabout. The width of the central section 15a is less than the diameter of the sponge base 4.

Plant embodied as in the drawings is provided with guide means which both occasion and control rotation of the pair of bearer side sections 15b. Such means comprise a first pair of straight parallel guides 8 fitted to the conveyor and integral therewith; these extend from the entry point of the conveyor 6 to a point marginally beyond a second batching unit 7 (also of conventional type) which is located above the conveyor and designed to deposit ice cream 13 on the sponge base. The purpose of the first pair of guides 8 is to maintain the side sections 15b of the bearer substantially coplanar with the central section 15a, spread apart to create a platform on which the composite base can rest.

Further on from the second batching unit 7, one has a second pair of guides 9 which exhibit respective upwardly-converging initial stretches 9a that depart from a level marginally below that of the straight guides 8, and at a distance apart slightly greater than that existing between the straight guides. The initial stretches 9a of the second pair of guides extend upward, drawing together gradually such that with the conveyor set in motion, the side sections 15b of a bearer coming into contact with the initial stretches 9a of the second pair of guides will be constrained to fold up into what is substantially a vertical position.

The same second pair of guides 9 comprises an intermediate parallel stretch that keeps the pair of side sections in this substantially vertical position in such a way that the sweet is lightly compressed.

The finished sweet thus consists of sponge cake with an ice cream filling, and accordingly, the length of the parallel stretch of the second pair of guides will be calculated to allow the side sections 15b to exert compression for a duration sufficient to ensure that the ice cream adheres to the sponge base. The second pair of guides also exhibits respective downwardly-diverging final stretches 9b designed to allow and control downward rotation of the pair of side sections 15b of the bearer, i.e. the reverse function of the initial stretches 9a. Downward rotation of the side sections, which descend under their own weight, is assisted at first by a parting rod (not illustrated) located in the same position as the final stretches 9b of the second guides, which penetrates between the two side sections and urges them apart, away from the vertical position occupied hitherto.

Finally one has a third pair of straight guides 10 following on from the second pair of guides 9, the purpose of which is to keep the side sections 15b of the bearer substantially coplanar with the central section 15a until arrival at the exit point of the conveyor, where the finished sweets are collected. The individual sweets thus produced are then frozen by conventional means, which are not illustrated. The conveyor 6 is driven intermittently, such that each movement forward sets a bearer 15, and the composite base positioned thereon, beneath the second batching unit 7; there is then a pause of sufficient duration to allow for deposition of the ice cream. Needless to say, plant of the kind will incorporate conventional timing means for coordination of the various movements and steps.

The second batching unit 7 will generally be capable of vertical movement in either direction so as to permit of drawing near to the sponge when depositing the ice cream, and drawing away thereafter. In such an instance, provision will be made for at least one pair of fixed arms 12 located adjacent to the batching unit 7, at either side of the conveyor 6; such arms extend into the path occupied by the conveyor such as to lie above the sponge base 4, in order to prevent any possibility of the ice cream and/or the sponge's being drawn upward as the batching unit 7 is raised.

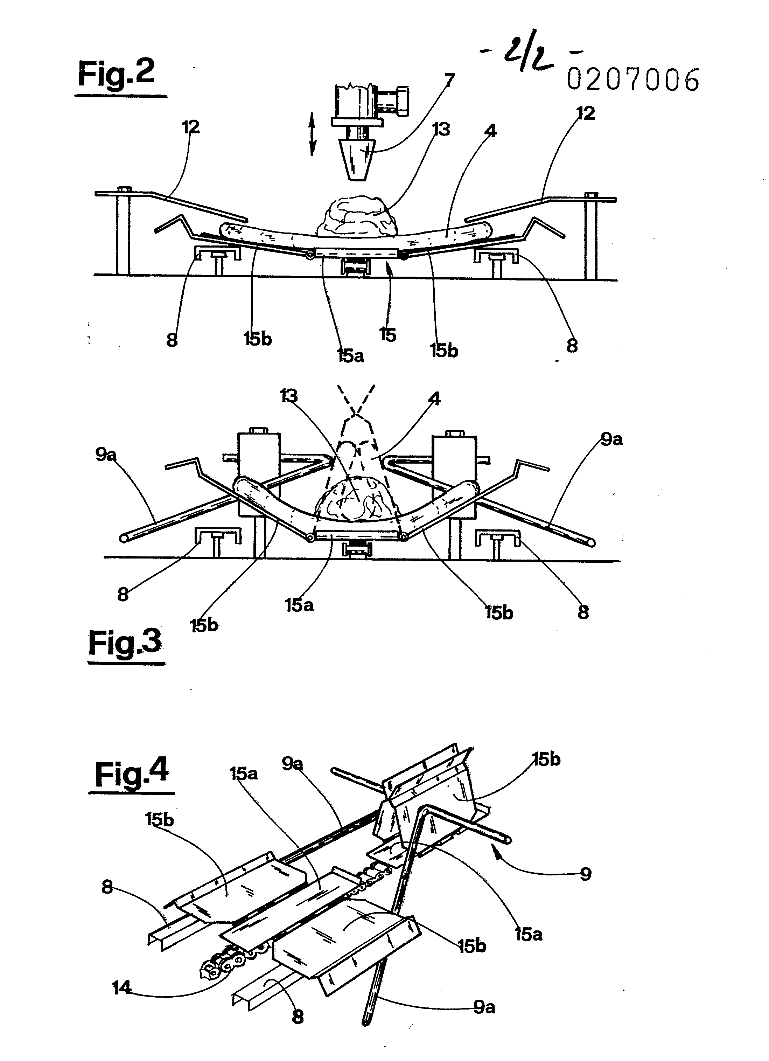

The process and plant thus described permit of obtaining a new individual sweet featuring ice cream and sponge which, as will be observed from fig 3, consists of a substantially circular sponge base 4 folded across 'turnover' fashion through its diameter so as to envelop the ice cream filling 13. The sweet is presented to the consumer packaged in the self-same sheet 2 of paper on which the sponge mix was deposited prior to being baked; thus, on the one hand, the consumer is able to lay hold on the sweet without actually making physical contact, and on the other, the manufacturer accomplishes folding of the sponge and achieves speed and economy of production.

Clearly enough, the option exists of utilizing a further wrapping in which to package one or more individual sweets; the original individual papers would be retained in such a package, however.

10

Claims

1)   A process for the manufacture of a new individual
     sweet featuring ice cream and sponge cake characterized in that it comprises the following steps:
     -piercing of a continuous sheet (1) of baking paper
     to the end of obtaining individual papers (2) disposed in files and held together by way of the perforations created;
     -deposition of sponge mix onto each individual paper
     by free fall in such a way that the mix will spread
     to assume a shape similar to but smaller than that
     of the paper;
     -baking of the sponge mix thus deposited on the continuous sheet of paper in an oven, thereby obtaining
     sponge bases each positioned on a relative paper;
     -separation of the individual papers together with
     the relative sponge bases, so as to form composite
     bases;
     -deposition of ice cream onto each composite base,
     substantially at the centre;
     -cross-folding of the base around the ice cream,
     'turnover' fashion, in such a way as to invest the
     sweet with its final shape;
     -freezing of the sweet thus produced.

2)   Process as in claim 1, wherein the step of piercing
     the sheet is implemented in such a way as to produce
     individual papers of substantially circular shape,
     with a pinked periphery.

3)  Plant for the manufacture of a new individual sweet featuring ice cream and sponge cake characterized in that it comprises:

-a press of conventional type, designed to pierce a continuous sheet (1) of baking paper in such a way as to create a number of files of individual sweet papers (2) which remain interconnected by way of the perforations produced;

-a first batching unit (3) of conventional type, which deposits quantities of sponge mix onto a rank of individual papers, simultaneously;

-an oven (5) of conventional type, in which the mix is baked to the end of producing sponge bases (4), each resting on a relative paper (2);

-a conveyor (6) provided with bearers (15), each of which in receipt of a sponge base and relative paper and comprising a central section (15a) integral with the conveyor, of width less than that of the sponge base, and a pair of side sections (15b) hinged one to each side of the central section;

-guide means designed to occasion and control rotation of the side sections;

-a second batching unit (7) of conventional type located above the conveyor and designed to deposit ice cream onto the sponge base;

-a conventional cold store in which to freeze the sweet obtained by the process.

4)  Plant as in claim 3, wherein the guide means comprise: a first pair of straight parallel guides (8) integral with the conveyor and extending from the entry point thereof to a point marginally beyond the second batching unit, designed to maintain the side sections of the bearer substantially coplanar with the central section; a second pair of guides (9) following on from the first pair, which consist of upwardly-converging initial stretches (9a) designed to occasion rotation upward of the pair of side sections, intermediate parallel stretches designed to keep the pair of side sections in a substantially vertical position, and downwardly-diverging final stretches (9b) designed to control downward rotation of the pair of side sections; and a third pair of straight parallel guides (10) following on from the second pair of guides, the purpose of which is to keep the side sections of the bearer substantially coplanar with the central section until arrival at the exit point of the conveyor.

5)     Plant as in claim 4, wherein a parting rod located at the exit end of the second pair of guides penetrates between the pair of side sections, while still in the substantially vertical position, to the end of occasioning downward rotation thereof.

6)     Plant as in claim 3, wherein at least one pair of fixed arms (12), located adjacent to the second batching unit and at either side thereof, extend into the path occupied by the conveyor such as to lie above the sponge base conveyed by a single bearer.

13

7)     Individual sweet featuring ice cream and sponge cake characterized in that it comprises a sponge base of substantially circular shape, folded across through its diameter, 'turnover' fashion, so as to envelop the ice cream.

8)     Sweet as in claim 7, characterized in that it is packaged in the individual paper on which the ingredients are deposited according to the process, without ever becoming separated therefrom.

0207006

**Fig.1**

**Fig.2**

**Fig.3**

**Fig.4**